# EUROPÄISCHE PATENTSCHRIFT

(11) **EP 0 842 483 B1**
(45) Veröffentlichungstag und Bekanntmachung des Hinweises auf die Patenterteilung: **16.02.2000**
(21) Anmeldenummer: 96918593.3
(22) Anmeldetag: 20.06.1996
(51) Int. Cl.: G06K 7/08, G06K 7/10

(54) **VERFAHREN ZUR ZUGRIFFSSTEUERUNG VON EINER DATENSTATION AUF MOBILE DATENTRÄGER**
PROCESS FOR CONTROLLING THE ACCESS OF A DATA STATION TO MOBILE DATA CARRIERS
PROCEDE DE COMMANDE DE L'ACCES D'UNE STATION DE LECTURE DE DONNEES A DES SUPPORTS MOBILES DE DONNEES

(30) Priorität: 03.08.1995 DE 19528599
(43) Veröffentlichungstag der Anmeldung: 20.05.1998
(73) Patentinhaber: SIEMENS AKTIENGESELLSCHAFT, 80333 München (DE)
(72) Erfinder: REINER, Robert, D-82008 Unterhaching (DE)
(86) Internationale Anmeldenummer: DE9601089
(87) Internationale Veröffentlichungsnummer: WO9706503

(56) Entgegenhaltungen:
- EP-A- 0 161 779
- EP-A- 0 285 419
- EP-A- 0 669 591
- WO-A-92/22040
- US-A- 4 471 345

## Beschreibung

Die Erfindung betrifft ein Verfahren zur Zugriffssteuerung von einer Datenstation auf mindestens zwei mobile Datenträger. Darüber hinaus betrifft die Erfindung einen mobilen Datenträger und eine Datenstation sowie ein System aus mobilen Datenträgern und einer Datenstation zur Durchführung des Verfahrens.

Bei mobilen Datenträgern, insbesondere solchen, die kontaktlos mit einer Datenstation kommunizieren, können sich im Empfangsfeld der Datenstation mehrere Datenträger befinden. Deshalb sind Maßnahmen vorzusehen, um beim Datenverkehr der Datenstation mit einem der mobilen Datenträger eine Kollision mit anderen sich im Empfangsfeld befindenden Datenträgern zu vermeiden.

Prinzipiell werden Arbitrierungsverfahren bisher in drahtgebundenen Bussystemen eingesetzt. Diese Arbitrierungsverfahren, insbesondere das vom sogenannten CAN-Bus her bekannte Arbitrierungsverfahren, setzen voraus, daß die angeschlossenen Busteilnehmer ausgesandte Nachrichten auch untereinander empfangen und auswerten können. Da ein mobiler Datenträger im Gegensatz zu einem drahtgebundenen, Busteilnehmer eine recht geringe Sendeleistung aufweist, die nicht für den Empfang der Nachricht durch andere mobile Datenträger ausreicht, können diese aus drahtgebundenen Bussystemen bekannten Arbitrierungsverfahren nicht ohne weiteres auf mobile Datenträger angewandt werden. Außerdem erfordern diese Arbitrierungsverfahren in jedem Busteilnehmer aufwendige Steuerungsmaßnahmen.

In der Literaturstelle IBM Technical Disclosure Bulletin, Band 37, Nr. 04B, April 1994, Seiten 235 - 237 ist ein Datenübertragungssystem für die automatische Identifizierung von Fahrzeugen beschrieben. Eine Basisstation sendet ein Signal mit einer vorbestimmten Frequenz, wodurch die Fahrzeuge veranlaßt werden, sich unter Abarbeitung eines Multizugriffsprotokolls zu registrieren. Die mobilen Stationen besetzen einen Übertragungskanal, um ihre Identifikationskennzeichen an die Basisstation zu senden. Das Multizugriffsprotokoll berücksichtigt den Fall, das mehr als ein Fahrzeug auf denselben Sendekanal zugreift. Nach erfolgter Registrierung wird den Fahrzeugen von der Basisstation eine Bestätigung gegeben.

In der Literaturstelle "Identifikationssysteme und kontaktlose Chipkarten", GME-Fachbericht 13, VDE-Verlag Berlin und Offenbach, 1994 sind verschiedene Realisierungsmöglichkeiten für Datenträger und Basisstationen für kontaktlose Datenübertragung gezeigt. Auf Seite 11 ist beschrieben, daß ein Datenträger nach dem Prinzip der Frequenzumtastung (FSK) arbeitet. Auf Seite 16 ist beschrieben, daß eine FSK mittels Schaltern auf einen Träger aufmoduliert wird. Auf Seiten 25 und 29 ist gezeigt, daß der Datenträger einen LC-Schwingkreis enthält. Auf Seite 34 ist ein Gesamtübertragungssystem dargestellt, wobei das Datenträgermodul zwei Spulenkreise umfaßt, deren Ausgangssignal zum Datenempfang einer Phasendemodulation zugeführt wird.

In der europäischen Patentanmeldung EP-A2-0 285 419 ist eine Zugriffssteuerungseinrichtung beschrieben, bei der eine Abfragestation aus einer Vielzahl von im Empfangsbereich befindlichen Transpondern im Laufe des Zugriffssteuerungsverfahrens einen zugriffsberechtigten Transponder auswählt. Die Transponder haben unterschiedliche Identifikationskennungen. Die Abfragestation fragt simultan nacheinander die Bits der Informationskennung ab. Wenn bei einem Transponder das von der Abfragestation nachgefragte Bit übereinstimmt, wird von diesem Transponder ein Gruppenantwortsignal an die Abfragestation zurückgesandt. Die Abfragestation wählt daraufhin zugriffsberechtigte Transponder aus.

In der nachveröffentlichten europäischen Patentanmeldung EP-A2-0 669 591 ist ein kontaktloses Datenübertragungssystem beschrieben, bei dem eine Empfangsstation aus einer Vielzahl von in ihrem Empfangsbereich befindlichen Transpondern einen Transponder auswählt. Aufgrund einer Anfrage an alle im Empfangsbereich befindlichen Transponder senden diese synchron ihre Identifikationskennung zurück. In der Empfangsstation angeordnete jeweilige Korrelatoren für die Bits "0" bzw. "1" werten die empfangenen Kennungen aus. Dabei wird festgestellt, ob an einer Bitstelle eine Kollision beider Bitwerte auftritt. Nachfolgend sendet die Empfangsstation ein Kommando, vorzugsweise durch Angabe von Bitposition und Datum, aus, um einen Selektivvorgang einzuleiten. Nur ein Teil der Transponder verbleibt im weiteren Auswahlverfahren.

Die Aufgabe der Erfindung besteht darin, ein Verfahren zur Zugriffssteuerung von einer Datenstation auf mindestens zwei mobile Datenträger anzugeben, das sicher Kollisionen verhütet und einfach realisierbar ist.

Weitere Aufgaben der Erfindung bestehen in der Angabe von Schaltungsmaßnahmen in einem mobilen Datenträger, einer Datenstation sowie eines Systems aus Datenstation und mindestens zwei Datenträgern, die zur Durchführung des Verfahrens geeignet sind.

Erfindungsgemäß wird die erstgenannte Aufgabe betreffend das Verfahren durch ein Verfahren nach den Merkmalen des Patentanspruchs 1 gelöst.

Ein mobiler Datenträger ist in Patentanspruch 8 angegeben, eine Datenstation in Patentanspruch 11 und ein System zur Durchführung des Verfahrens in Patentanspruch 14.

Bei der erfindungsgemäßen Lösung ist ein "Mithören" des Datenverkehrs zwischen mobilen Datenträgern und der Datenstation durch einen anderen Datenträger nicht notwendig. Die Steuerungsmaßnahmen für die Arbitrierung sind im wesentlichen in der Datenstation angeordnet.

Wenn an einer Bitstelle der von den Datenträgern ausgesandten Identifikationskennung zwei unterschiedliche Bitwerte von der Datenstation festgestellt werden, wird der weitere Ablauf des Arbitrierungsverfahrens mit einem von der Datenstation festgelegten Bitwert weitergeführt. Wird einem Bitwert stets der Vorzug gegeben, ergibt sich eine Prioritätsregelung der Datenträger untereinander, die von der Identifikationskennung abhängt. Vorteilhafterweise muß dann ein von der Datenstation an die Datenträger gesandter Befehl keinen variablen Anteil für den den weiteren Arbitrierungsverlauf festlegenden Bitwert enthalten. Alternativ oder ergänzend hierzu kann vorgesehen werden, den Bitwert für die Weiterführung des Arbitrierungsverfahrens in Abhängigkeit von der Signalfeldstärke einzustellen. Wenn ein Signal schwach empfangen wird, deutet dies darauf hin, daß der Datenträger den Empfangsbereich entweder gerade erst betreten hat oder diesen wieder verläßt. Die Empfangsverbindung zwischen Datenstation und Datenträger wird dann entweder noch besser werden oder wahrscheinlicherweise unterbrochen werden. Es ist deshalb vorteilhaft, demjenigen Datenträger, dessen Signal stärker empfangen wird, Priorität bei der Arbitrierung zu geben.

Wenn auf diese Weise ein Bitwert für die weitere Abfrage der Identifikationskennungen festgelegt worden ist, wird von der Datenstation ein Befehl ausgesandt, durch den die anderen Datenträger, die an dieser Bitstelle den festgelegten Bitwert nicht aufweisen, in einen passiven Zustand versetzt werden, so daß sie am weiteren Datenverkehr vorerst nicht mehr teilnehmen. Ist das Arbitrierungsverfahren für einen Datenträger und der nachfolgende Datenverkehr mit diesem Datenträger abgeschlossen, reaktiviert die Datenstation das Arbitrierungsverfahren von neuem mit diesen übrigen, noch nicht bearbeiteten Datenträgern. Das Arbitrierungsverfahren wird solange wiederholt, bis alle sich im Empfangsbereich der Datenstation befindenden Datenträger abgearbeitet sind.

Das Arbitrierungsverfahren kann beschleunigt werden, indem beim Feststellen von zwei verschiedenen Bitwerten der Identifikationskennung an einer Bitstelle für die weitere Aussendung der Identifikationskennungen durch die Datenträger nur derjenige Teil nach dieser Bitstelle verwendet wird. Außerdem kann nach Erkennung des Empfangs verschiedener Bitwerte an einer Bitstelle der Identifikationskennung die Datenstation durch einen an die Datenträger ausgesandten Befehl deren weitere Aussendung der Identifikationskennung abbrechen.

Zur Realisierung eines Datenträgers und einer Datenstation wird für die zu übertragenden Bitwerte der Identifikationskennung eine Frequenzmodulation durchgeführt. Einem ersten logischen Zustand einer Bitstelle der Identifikationskennung wird eine erste Modulationsfrequenz, einem zweiten logischen Zustand eine zweite Modulationsfrequenz (FSK - Frequency Shift Keying) zugeordnet. Das FSK-Signal wird einem Träger aufmoduliert, beispielsweise durch Amplituden- oder Phasenmodulation oder einer Kombination daraus. Dies wird beispielsweise dadurch bewirkt, daß ein Bauelement über einen Schalter, der mit der ersten oder der zweiten Frequenz getaktet ist, mit der Spule des Schwingkreises im Datenträger verbunden wird. Je nach verwendetem Bauelement, beispielsweise Widerstand, Diode oder Kondensator, und je nach Schaltungsart, beispielsweise Seriell- oder Parallelschaltung, wird Strom und/oder Spannung an der Spule im Takt der Modulationsfrequenz verändert. Dadurch werden dem Träger von der Taktfrequenz abhängige Seitenbänder aufmoduliert. Diese können in der Datenstation entsprechend demoduliert werden, um die übertragenen Bitwerte zurückzugewinnen. Als Träger wird zweckmäßigerweise die Empfangsträgerfrequenz verwendet, mit der der Schwingkreis des Datenträgers von der Datenstation erregt wird, oder ein Subträger, z.B. ein durch Teilung aus dem erregten Träger gewonnenes Signal.

In der Datenstation sind die Empfangskreise derart ausgeführt, daß beide Modulationsfrequenzen nebeneinander erkannt werden, um das Vorliegen von zwei verschiedenen Bitwerten an einer Bitstelle der Identifikationskennung festzustellen. Zweckmäßigerweise wird hierzu das empfangene Signal durch je ein bei der ersten und bei der zweiten Modulationsfrequenz wirkendes Bandpaßfilter gefiltert und anschließend mit einer Schwelle verglichen. Eine Steuerungseinrichtung ermittelt daraus das Vorhandensein von zwei verschiedenen Bitwerten an einer Bitstelle der Identifikationskennung. Die Steuerungseinrichtung wertet vorteilhafterweise außerdem auch den Empfangspegel für die erste oder zweite Frequenz aus, um davon abhängig den weiteren Verlauf des Arbitrierungsverfahrens zu steuern.

Nachfolgend wird die Erfindung anhand der in der Zeichnung dargestellten Figuren näher erläutert. Es zeigen:
- Figur 1 (a) bis (d): Bitmuster für Identifikationskennungen verschiedener Datenträger und zu bestimmten Verfahrensabschnitten in der Datenstation empfangene Bitmuster und
- Figur 2: eine schaltungstechnische Realisierung für einen Datenträger und eine Datenstation.

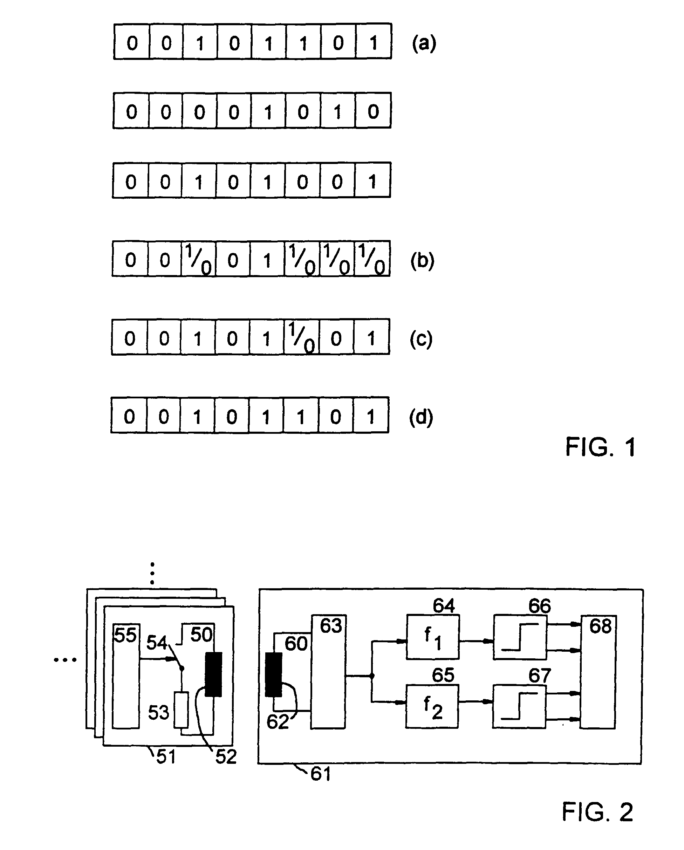

Ein Datenträger für kontaktlosen Nachrichtenverkehr mit einer Datenstation ist beispielsweise eine kontaktlose Chipkarte. Sie enthält einen Schwingkreis 50 (Figur 2), der in induktiver Kopplung mit einem Schwingkreis 60 in der Datenstation 61 in Verbindung steht. Der Datenträger 51 bezieht seine Energieversorgung aus dem von Schwingkreis 60 abgegebenen Signal. Ebenso werden Trägerfrequenzen und Taktfrequenzen im Datenträger 51 aus dem von der Datenstation 61 abgegebenen Signal abgeleitet. Jeder der in der Figur 2 symbolisch dargestellten drei Datenträger weist eine eindeutige, nur ihm zugeordnete Identifikationsnummer auf, die üblicherweise vom Hersteller eingespeichert wird. Die ID-Nummern unterscheiden sich somit an mindestens einer Bitstelle. In Figur 1 (a) sind drei beispielhafte ID-Nummern von 8 Bit Länge angegeben. In der Praxis wird die ID-Nummer aufgrund einer sehr hohen Datenträgeranzahl wesentlich länger sein.

Um eine Arbitrierung durchzuführen, das heißt eine Priorisierung in der Bearbeitung der Datenträger 51 durch die Datenstation 61, wird von der Datenstation 61 ein Befehl ausgesandt, der von allen sich im Empfangsfeld der Datenstation befindenden Datenträgern empfangen werden kann, wodurch die Datenträger veranlaßt werden, ihre ID-Nummer zu senden. Das Senden der ID-Nummer erfolgt aufgrund der Taktkopplung an die Sendefrequenz des Datenträgers 61 für alle Datenträger synchron. In der Datenstation wird daraufhin die Bitfolge der Figur 1 (b) empfangen. Die Datenstation 61 ist - wie unten näher erläutert - dahingehend ausgelegt, daß sie an einer Bitstelle unterschiedliche Bitwerte "1" und "0" gleichzeitig erkennen kann. An der dritten Bitstelle der Empfangsdaten nach Figur 1 (b) werden gleichzeitig beide logischen Zustände "1" und "0" erkannt. Dies liegt daran, daß die drei ID-Nummern nach Figur 1 (a) an der dritten Bitstelle beide logische Zustände aufweisen. In entsprechender Weise werden auch an der sechsten, siebten und achten Bitstelle beide Zustände empfangen.

Nachdem in der Datenstation an der dritten Bitstelle der Empfang beider logischer Zustände erkannt worden ist, wird für die weitere Kommunikation im Verlauf des Arbitrierungsverfahrens ein Bitwert festgelegt, den die ID-Karten, mit denen die Arbitrierung fortgeführt wird, aufweisen müssen. Im vorliegenden Fall wird die Arbitrierung mit denjenigen ID-Karten fortgeführt, die an der dritten Bitstelle der ID-Nummer eine "1" aufweisen. Die anderen ID-Karten, nämlich diejenigen, die an der dritten Bitstelle ihrer ID-Nummer eine "0" aufweisen, werden durch einen Befehl der Datenstation in einen passiven Zustand versetzt, so daß sie am weiteren Verlauf dieses Arbitrierungsverfahrens nicht mehr teilnehmen, bis ein einziger Datenträger ausgewählt worden ist und der Datenverkehr mit diesem Datenträger abgeschlossen ist. Daraufhin werden die übrigen Datenträger durch Befehl von der Datenstation wieder reaktiviert. Die Datenträger mit dem Bitwert "1" an der dritten Bitstelle werden von der Datenstation aufgefordert, einen Teil ihrer ID-Nummer wiederum zu senden. Nunmehr werden an der sechsten Bitstelle unterschiedliche Bitwerte empfangen. Wiederum wird von der Datenstation diejenige ID-Karte in den passiven Zustand versetzt, die an der sechsten Bitstelle den Bitwert "0" aufweist; die Kommunikation wird mit der anderen Karte, die dort den Bitwert "1" aufweist, fortgesetzt, wobei die ID-Karte von der Datenstation wiederum aufgefordert wird, ihre ID-Nummer zu senden. Nunmehr tritt an keiner Bitstelle der empfangenen ID-Daten eine Doppeldeutigkeit auf (Figur 1 (d)). Es liegt jetzt nur ein einziger Datenträger vor, der noch aktiviert ist. Mit diesem führt dann die Datenstation den gewünschten Nachrichtenverkehr aus. Nach Abschluß des Datenverkehrs wird dieser Datenträger als abgearbeitet deaktiviert, die übrigen Datenträger werden reaktiviert. Unter Anwendung des gleichen Arbitrierungsverfahrens wird ein weiterer Datenträger für eine Nachrichtenkommunikation ausgewählt. Die Datenstation wirkt beim Arbitrierungsverfahren als sogenannter Master.

Gemäß einer Weiterbildung wird, wenn gemäß Figur 1 (b) an der dritten Bitstelle zwei unterschiedliche Bitwerte empfangen werden, durch die Datenstation die Aussendung der übrigen Bitstellen 4 bis 8 mittels eines Befehls abgebrochen. Zusätzlich können die Datenträger veranlaßt werden, nach dem Erkennen verschiedener Bitwerte an der dritten Bitstelle im Fall der Figur 1 (c) nachfolgend nur die Bitwerte der Bitstellen 4 bis 8 zu übertragen beziehungsweise im Fall der Figur 1 (d) nur die Bitwerte der Bitstellen 7 bis 8. Dadurch wird das Arbitrierungsverfahren beschleunigt.

Bei der Auswahl des Bitwerts "1" oder "0" für die Fortsetzung des Arbitrierungsverfahren nach dem Erkennen einer Doppeldeutigkeit an einer Bitstelle kann einer der logischen Zustände von der Datenstation bedingungslos vorgegeben werden. Es ergibt sich damit eine von der ID-Nummer abhängige automatische Prioritätsregelung. Zusätzlich oder alternativ ist die Auswahl desjenigen Bitwerts zweckmäßig, der den höheren Empfangspegel liefert und somit erfahrungsgemäß momentan den sichersten und am wenigsten gestörten Sende- und Empfangsbetrieb abwickeln kann.

Bei der prinzipiellen schaltungstechnischen Darstellung eines der Datenträger 51 und der Datenstation 61 sind nur die in Zusammenhang mit der Erfindung wesentlichen Schaltungseinheiten angegeben. Insbesondere sind Empfangs- und Auswerteeinrichtungen im Datenträger 51 sowie Sendeeinrichtungen in der Datenstation 61 der Einfachheit wegen nicht dargestellt.

Der Datenträger 51 enthält einen Sendeschwingkreis 50, der eine Spule 52 enthält. Parallel zur Spule 52 ist ein Widerstand 53 taktgesteuert über einen Schalter 54 schaltbar. Der Schalter 54 wird von einer Steuerungseinrichtung 55 taktweise ein- und ausgeschaltet. Das von der Steuerungseinrichtung 55 abgegebene Schaltsignal weist bei einem zu übertragenden Bitwert "0" eine erste Schaltfrequenz f₁ auf und bei einem zu übertragenden Bitwert "1" eine zweite von der ersten verschiedene Schaltfrequenz f₂. Durch das taktweise Parallelschalten des Widerstandes 53 zur Spule 52 des Schwingkreises 50 werden dem Sendeträger, mit dem der Schwingkreis gespeist wird, Seitenbänder aufmoduliert. Dabei unterscheiden sich die aufmodulierten Frequenzen entsprechend dem zu übertragenden Bitwert "0" oder "1". Anstelle des Widerstands 53 sind eine Vielzahl von weiteren elektronischen Bauelementen möglich, vorzugsweise Kondensatoren oder auch nicht-lineare Elemente wie Dioden, die einen Klirrfaktor und somit Seitenbänder bei Vielfachen der Trägerfrequenz erzeugen. Als Trägerfrequenz kann die von der Datenstation ausgesandte Trägerfrequenz verwendet werden. Vorteilhafterweise wird eine vom Träger der Datenstation verschiedene, aber davon beispielsweise durch Teilung abgeleitete Frequenz, ein sogenannter Subträger, verwendet. Die Modulationsfrequenzen f₁ und f₂ müssen in bezug auf den Träger derart liegen, daß die gewünschte Bitrate für die Datenübertragung erreichbar ist.

Die Datenstation 61 kann stationär fest angeordnet sein oder ihrerseits auch mobil, z.B. als Handgerät. Die Datenträger 51 hingegen sind stets frei beweglich mobil. Die Datenstation 61 enthält einen Empfangsschwingkreis 60 mit einer Schwingkreisspule 62. Das Empfangssignal wird durch einen herkömmlichen Empfänger 63 selektiert, ins Basisband umgesetzt und verstärkt. Vom Empfangssignal werden zur Demodulation der Bitwerte "0" und "1" ein erstes Filter 64, das Signale bei der ersten Frequenz f₁ ausfiltert, und ein zweites Filter 65, das Signale bei der zweiten Frequenz f₂ ausfiltert, gespeist. Den Filtern 64, 65 ist jeweils ein Schwellenwertdetektor 66 bzw. 67 nachgeschaltet. Dadurch sind beide Empfangszustände "0" und "1" für eine Bitstelle bei den von den Datenträgern synchron gesandten ID-Nummern gleichzeitig feststellbar. Die Ausgangssignale der Detektoren 66, 67 werden in einer Steuerungseinrichtung 68 auf das Vorliegen des Zustands "1" oder "0" oder "1/0" ausgewertet. Durch die Steuerungseinrichtung 68 wird außerdem festgelegt, mit welchem der Bitwerte das Arbitrierungsverfahren fortgesetzt wird, wenn an einer Bitstelle verschiedene Bitwerte "1/0" festgestellt werden. Um mit demjenigen Bitwert fortzufahren, der den höheren Empfangspegel aufweist, wird der Steuerungseinrichtung 68 von den Detektoren 66, 67 außerdem eine Information über den jeweiligen Empfangspegel mitgeteilt. Die Pegelwerte werden hierzu in der Steuerungseinrichtung 68 miteinander verglichen, wobei derjenige Bitwert "1" oder "0" ausgewählt wird, der den höheren Empfangspegel aufweist.

## Patentansprüche

1. Verfahren zur Zugriffssteuerung von einer Datenstation (61) auf mindestens zwei mobile Datenträger (51), bei dem die Datenträger nach Aufforderung der Datenstation synchron eine Identifikationskennung senden und die Datenstation feststellt, ob an mindestens einer Bitstelle der empfangenen Identifikationskennungen zwei verschiedene Bitwerte empfangen werden, und dann, wenn an mindestens einer Bitstelle der Identifikationskennungen zwei verschiedene Bitwerte als empfangen festgestellt wurden, nach Aufforderung durch die Datenstation nur ein solcher der Datenträger, dessen Identifikationskennzeichen an der Bitstelle einen von der Datenstation festgelegten Bitwert aufweist, nur einen Teil der Identifikationskennung wiederum sendet.

2. Verfahren nach Anspruch 1,
**dadurch gekennzeichnet,** daß
als der festgelegte Bitwert durch die Datenstation (61) derjenige Bitwert ermittelt wird, der mit größerer Signalstärke festgestellt wird.

3. Verfahren nach Anspruch 1 oder 2,
**dadurch gekennzeichnet,** daß
dann, wenn von der Datenstation (61) der Empfang von mindestens zwei Bitwerten an einer Bitstelle festgestellt wird, das Aussenden der verbleibenden Bitstellen der Identifikationskennung von den mobilen Datenträgern (51) nach Aufforderung durch die Datenstation abgebrochen wird.

4. Verfahren nach einem der Ansprüche 1 bis 3,
**dadurch gekennzeichnet,** daß
dann, wenn in mindestens einer Bitstelle der Identifikationskennung zwei verschiedene Bitwerte als empfangen festgestellt werden, die Datenträger (51) von der Datenstation (61) veranlaßt werden, nachfolgend nur die in bezug auf diese Bitstelle niedrigerwertigen oder höherwertigen Bitstellen zu übertragen.

5. Verfahren nach Anspruch 1 bis 4,
**dadurch gekennzeichnet,** daß
dann, wenn in mindestens einer Bitstelle der Identifikationskennung zwei verschiedene Bitwerte als empfangen festgestellt werden, diejenigen Datenträger, die einen anderen als den festgelegten Bitwert an der Bitstelle enthalten, von der Datenstation veranlaßt werden, keinen weiteren Datenverkehr auszuführen, bis der Datenverkehr mit denjenigen Datenträgern, die den festgelegten Bitwert enthalten, beendet ist.

6. Verfahren nach einem der Ansprüche 1 bis 5,
**dadurch gekennzeichnet,** daß
die logischen Zustände ("0", "1") der Identifikationskennung durch die Datenträger frequenzmoduliert übertragen werden, daß in der Datenstation auf das Empfangssignal je eine Filterung (f₁, f₂) für die den logischen Zuständen entsprechenden Frequenzbereiche angewandt wird.

7. Verfahren nach Anspruch 6,
**dadurch gekennzeichnet,** daß
einem ersten logischen Zustand ("0") eine erste Frequenz (f1) zugeordnet ist und einem zweiten logischen Zustand eine zweite Frequenz (f₂) und daß ein Trägersignal entsprechend dem zu übertragenden Bitwert mit der ersten oder der zweiten Frequenz moduliert wird.

8. Mobiler Datenträger zur Durchführung des Verfahrens nach einem der Ansprüche 1 bis 7,
**dadurch gekennzeichnet,**
daß ein Schwingkreis (50) zur induktiv gekoppelten Signalübertragung an die Datenstation (61) vorgesehen ist, dessen Schwingung in Abhängigkeit von einem zu übertragenden Bit einer Identifikationskennung entweder mit einem Signal einer ersten oder einer zweiten Frequenz modulierbar ist, und daß der Datenträger derart steuerbar ist, daß nach einer Aussendung einer ersten Anzahl von Bits der Identifikationskennung nachfolgend eine Aussendung einer zweiten Anzahl von Bits der Identifikationskennung durchgeführt wird, wobei die zweite Anzahl kleiner als die erste Anzahl ist.

## Claims

1. Method for access control from a data station (61) to at least two mobile data carriers (51), in the case of which method the data carriers transmit an identification tag synchronously on request from the data station, and the data station confirms whether two different bit values are received at at least one bit position in the received identification tags, and if two different bit values have been confirmed as having been received at at least one bit position in the identification tags, only one of the said data carriers, whose identification designation has a bit value, defined by the data station, at the bit position, transmits only a part of the identification tag once again on request by the data station.

2. Method according to Claim 1, characterized in that that bit value which is detected with the greater signal strength is determined to be the defined bit value by the data station (61).

3. Method according to Claim 1 or 2, characterized in that, once the reception of at least two bit values at one bit position has been confirmed by the data station (61), the transmission of the remaining bit positions of the identification tag from the mobile data carriers (51) is interrupted on request by the data station.

4. Method according to one of Claims 1 to 3, characterized in that, if two different bit values are confirmed as having been received in at least one bit position in the identification tag, the data station (61) causes the data carriers (51) to transmit subsequently only those bit positions which are less significant or more significant than this bit position.

5. Method according to Claims 1 to 4, characterized in that, if two different bit values are confirmed as having been received in at least one bit position in the identification tag, those data carriers which contain a bit value at the bit position which differs from the defined bit value are caused by the data station not to carry out any further data traffic until the data traffic with those data carriers which contain the defined bit value has been completed.

6. Method according to one of Claims 1 to 5, characterized in that the logic states ("0", "1") of the identification tag are transmitted in a frequency-modulated manner by the data carriers, in that in each case one filtering process (f₁, f₂) for the frequency ranges which correspond to the logic states is applied to the received signal in the data station.

7. Method according to Claim 6, characterized in that a first frequency (f₁) is assigned to a first logic state ("0"), and a second frequency (f₂) is assigned to a second logic state, and in that a carrier signal corresponding to the bit value to be transmitted is modulated at the first frequency or at the second frequency.

8. Mobile data carrier for carrying out the method according to one of Claims 1 to 7, characterized in that a tuned circuit (50) for inductively coupled signal transmission to the data station (61) is provided, the oscillation of which tuned circuit (50) can be modulated either with a signal at a first frequency or with a signal at a second frequency as a function of a bit, which is to be transmitted, of an identification tag, and in that the data carrier can be controlled in such a manner that, after transmission of a first number of bits of the identification tag, a second number of bits of the identification tag are then transmitted, with the second number being less than the first number.

## Revendications

1. Procédé de commande d'accès d'une station de données (61) à au moins deux supports de données mobiles (51), dans lequel les supports de données, après demande par la station de données, envoient de manière synchrone une marque d'identification et la station de données détermine si deux valeurs binaires différentes ont été reçues à au moins une position binaire des marques d'identification reçues et ensuite, si deux valeurs binaires différentes ont été détectées comme reçues à au moins une position binaire des marques d'identification, après demande par la station de données, seul un des supports de données dont la marque d'identification présente à la position binaire considérée une valeur binaire fixée par la station de données émet de nouveau seulement une partie de la marque d'identification.

2. Procédé selon la revendication 1, caractérisé par le fait que la station de données (61) détermine comme valeur binaire fixée la valeur binaire qui a été détectée avec la plus grande intensité de signal.

3. Procédé selon la revendication 1 ou 2, caractérisé par le fait que, lorsque la station de données (61) a détecté la réception d'au moins deux valeurs binaires à une position binaire, l'émission des positions binaires restantes de la marque d'identification par les supports de données mobiles (51) est interrompue sur la demande de la station de données.

4. Procédé selon l'une des revendications 1 à 3, caractérisé par le fait que, lorsque deux valeurs binaires différentes ont été détectées comme reçues à au moins une position binaire de la marque d'identification, la station de données (61) demande aux supports de données (51) de ne transmettre ensuite que les positions binaires de poids plus faible ou plus fort par rapport à cette position binaire.

5. Procédé selon les revendications 1 à 4, caractérisé par le fait que, lorsque deux valeurs binaires différentes ont été détectées comme reçues à au moins une position binaire de la marque d'identification, la station de données demande aux supports de données qui contiennent à la position binaire une valeur binaire différente de la valeur binaire fixée de ne plus mettre en oeuvre de trafic de données jusqu'à ce que le trafic de données avec les supports de données qui contiennent la valeur binaire fixée soit terminé.

6. Procédé selon l'une des revendications 1 à 5, caractérisé par le fait que les supports de données transmettent les états logiques ("0", "1") de la marque d'identification avec une modulation de fréquence et que, dans la station de données, un filtrage (f₁, f₂) est appliqué à chaque fois au signal reçu pour les plages de fréquences correspondant aux états logiques.

7. Procédé selon la revendication 6, caractérisé par le fait qu'une première fréquence (f₁) est associée à un premier état logique ("0") et une deuxième fréquence (f₂) à un deuxième état logique et qu'un signal de porteuse est modulé avec la première ou la deuxième fréquence en fonction de la valeur binaire à transmettre.

8. Support de données mobile pour la mise en oeuvre du procédé selon l'une des revendications 1 à 7, caractérisé par le fait qu'un circuit oscillant (50) est prévu pour la transmission de signal par couplage inductif à la station de données (61), que son oscillation peut être modulée en fonction d'un bit à transmettre d'une marque d'identification, soit avec un signal ayant une première fréquence soit avec un signal ayant une deuxième fréquence et que le support de données peut être commandé de telle sorte que, après une émission d'un premier nombre de bits de la marque d'identification, il s'effectue ensuite une émission d'un deuxième nombre de bits de la marque d'identification, le deuxième nombre étant inférieur au premier nombre.
